# EUROPÄISCHE PATENTSCHRIFT

(11) **EP 2 390 523 B1**
(45) Veröffentlichungstag und Bekanntmachung des Hinweises auf die Patenterteilung: **17.07.2013**
(21) Anmeldenummer: 11163433.3
(22) Anmeldetag: 21.04.2011
(51) Int. Cl.: F16D 41/08, F16D 43/02, B60N 2/22

(54) **Schaltbare Kupplung**
Switchable coupling
Coupleur embrayable

(30) Priorität: 25.05.2010 DE 102010021409
(43) Veröffentlichungstag der Anmeldung: 30.11.2011
(73) Patentinhaber: Schaeffler Technologies AG & Co. KG, 91074 Herzogenaurach (DE)
(72) Erfinder: Hochmuth, Harald, 91469 Hagenbüchach (DE)

(56) Entgegenhaltungen:
- WO-A1-96/20352
- DE-A1-102005 030 719
- DE-A1-102005 061 791
- US-A1- 2005 006 193

## Beschreibung

Die Erfindung betrifft eine schaltbare Kupplung mit einem Freilauf, einem eine Klemmfläche aufweisenden Gehäuse, einem gegenüber dem Gehäuse drehbaren Antriebselement, einem gegenüber dem Gehäuse drehbaren Abtriebselement, mit an dem Abtriebselement vorgesehenen, der Klemmfläche zugewandten Klemmrampen, mehreren Klemmrollen, die zwischen der Klemmfläche und den Klemmrampen angeordnet sind, ein mit dem Antriebselement verbundener, in dem Gehäuse entlang einer Laufbahn bewegbarer Stellring, der Anlageflächen für die Klemmrollen aufweist.

### Hintergrund der Erfindung

Eine gattungsgemäße schaltbare Kupplung ist aus der DE 195 49 548 C1 oder WO 96/20352 A1 bekannt. Derartige schaltbare Kupplungen, die auch als Klemmgesprerre bezeichnet werden, werden unter anderem bei Sitzhöhenverstellungen von Kraftfahrzeugen eingesetzt. Ein Gehäuse weist eine zylindrische Ausnehmung auf, deren Zylinderwand eine Klemmbahn bildet. Koaxial zu der zylindrischen Ausnehmung ist ein Abtriebselement vorgesehen, das an seiner der Klemmbahn zugewandten Mantelfläche mit mehreren über den Umfang verteilt angeordneten Klemmrampen versehen ist. Zwischen den Klemmrampen und der Klemmbahn sind Klemmrollen gefedert angeordnet, wobei die Klemmrollen zwischen der Klemmfläche und dem mit dem Antriebselement verbundenen Stellring einklemmbar sind. Das in das Abtriebselement eingeleitete Lastelement kann durch die auf einen besetzen Sitz wirkende Gewichtskraft erzeugt werden. Bei unbelastetem Sitz überträgt das Halteelement das von einem Federelement ausgeübte Lastmoment. Das Abtriebselement ist als Welle ausgebildet, die sich in Klemmstellung gegenüber dem Gehäuse nicht drehen kann, weil in beiden Drehrichtungen die Klemmrollen in die Zwischenräume zwischen Klemmfläche und Klemmrampen einrollen und eine Klemmverbindung zwischen Gehäuse und Welle aufrechterhalten. Nach dem Lösen der Klemmverbindung dient das Lastmoment der Verstellung der Sitzhöhe.

Obwohl sich derartige schaltbare Kupplungen mit einem Freilauf seit vielen Jahren bewährt haben, kann der Fall eintreten, dass der Stellring im Rückhub des Antriebs entgegen der Zustellbewegung gedreht wird. Diese Rückdrehung ist abhängig von der Reibung zwischen den beteiligten bewegten Komponenten und daher undefiniert. Die unerwünschte Drehung des Stellrings führt dazu, dass beim nächsten bzw. bei jedem Hub der Betätigung der entstandene Leerweg wieder überwunden werden muss. Dem Benutzer wird dadurch der Eindruck einer schlechten Haptik vermittelt, ferner ist der Wirkungsgrad verschlechtert, da der Stellring bei jedem Hub zunächst den Leerweg überwinden muss.

### Zusammenfassung der Erfindung

Der Erfindung liegt daher die Aufgabe zugrunde, eine schaltbare Kupplung anzugeben, bei der durch den Stellring hervorgerufene Schaltverluste verringert sind oder vermieden werden.

Zur Lösung dieser Aufgabe ist bei einer schaltbaren Kupplung der eingangs genannten Art erfindungsgemäß vorgesehen, dass der schaltbare Freilauf eine auf den Stellring einwirkende Reibbremse aufweist.

Der Erfindung liegt die Idee zugrunde, dass mittels einer Reibbremse eine unerwünschte Bewegung des Stellrings während des Rückhubs vermieden werden kann. Dadurch wird auch verhindert, dass dem Benutzer das Gefühl einer schlechten Haptik vermittelt wird. Die Reibbremse bewirkt, dass der Stellring während des Rückhubs gebremst wird, sodass er überhaupt nicht oder allenfalls geringfügig zurückgedreht wird.

Gemäß einer ersten Ausgestaltung der Erfindung kann es vorgesehen sein, dass die Reibbremse als ein mit dem Stellring verbundener Reibring ausgebildet ist, der in dem Gehäuse im Bereich der Laufbahn angeordnet ist. Diese Variante kann mit vergleichsweise geringem Aufwand realisiert werden, indem ein herkömmlicher Stellring lediglich mit dem Reibring versehen wird, damit die Reibbremse entsteht.

Es wird besonders bevorzugt, dass der Reibring der erfindungsgemäßen schaltbaren Kupplung mit Vorspannung in das Gehäuse eingesetzt ist. Die Vorspannung bewirkt, dass der Reibring mit seiner Außenseite an der Laufbahn des Stellrings in dem Gehäuse anliegt, sodass die gewünschte Reibung entsteht, die eine unerwünschte Rückdrehung des Stellrings verhindert.

Bei einer bevorzugten Weiterbildung der Erfindung kann es vorgesehen sein, dass der Reibring der erfindungsgemäßen schaltbaren Kupplung an seiner Außenseite wenigstens eine, vorzugsweise mehrere Reibflächen aufweist, die an der Laufbahn in dem Gehäuse anliegen. Der Reibring kann somit definierte Reibflächen aufweisen, sodass ein gleichmäßiges Reibverhalten sichergestellt wird. Auch bei langer Betriebsdauer oder bei auftretenden Temperaturschwankungen kann ein bestimmtes Reibmoment gewährleistet werden.

Besonders bevorzugt wird es dabei, dass der Reibring der erfindungsgemäßen schaltbaren Kupplung zwei einander gegenüberliegende Reibflächen aufweist.

Es liegt auch im Rahmen der Erfindung, dass der Reibring als offener Ring ausgebildet ist. Der offene Ring weist eine gewisse Elastizität auf, durch die die gewünschte Vorspannung des Rings in dem Gehäuse erzeugt werden kann.

Bei der erfindungsgemäßen schaltbaren Kupplung wird es besonders bevorzugt, dass der Reibring aus Stahl besteht. Mit diesem Werkstoff kann ein näherungsweise konstantes Reibmoment über die gesamte Lebensdauer sichergestellt werden, zudem sind keine temperaturbedingten Änderungen des Reibmoments zu erwarten.

Eine besonders sichere Funktion ergibt sich bei der erfindungsgemäßen schaltbaren Kupplung, wenn der Reibring mit dem Stellring formschlüssig verbunden ist. Der Stellring und der Reibring können an wenigstens einer Stelle fest miteinander verbunden sein, sodass das von dem Reibring erzeugte Bremsmoment auf den Stellring übertragen wird.

Eine alternative Ausgestaltung der erfindungsgemäßen schaltbaren Kupplung sieht vor, dass die Reibbremse Nocken aufweist, die an dem Stellring radial nach außen weisend angeformt sind und an der Laufbahn des Gehäuses anliegen. Anders als bei der zuvor beschriebenen Ausführung wird kein Reibring eingesetzt, stattdessen wird ein mit Nocken versehener Stellring eingesetzt, sodass der Stellring direkt durch die als Reibbremse wirkenden Nocken gebremst wird. Dementsprechend erfordert eine derartige Reibbremse lediglich einen geringen Platzbedarf.

Bei der erfindungsgemäßen schaltbaren Kupplung können die Nocken aus einem Elastomer bestehen, vorzugsweise wird ein temperaturbeständiges Elastomer ausgewählt, bei dem keine temperaturbedingte Relaxation auftritt. Die aus dem Elastomer bestehenden Nocken sind radial am Stellring angeordnet und liegen formschlüssig an der Laufbahn in dem Gehäuse an, sodass beim Rückhub ein Bremsmoment erzeugt wird.

### Kurze Beschreibung der Zeichnung

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: einen Ausschnitt einer erfindungsgemäßen schaltbaren Kupplung in einer Draufsicht;
- Fig. 2: einen Schnitt entlang der Linie II-II von Fig. 1;
- Fig. 3: die in Fig. 1 gezeigte schaltbare Kupplung während des Schaltvorgangs;
- Fig. 4: die in Fig. 3 gezeigte schaltbare Kupplung nach dem Schaltvorgang; und
- Fig. 5: einen Ausschnitt eines zweiten Ausführungsbeispiels einer erfindungsgemäßen schaltbaren Kupplung.

### Ausführliche Beschreibung der Zeichnung

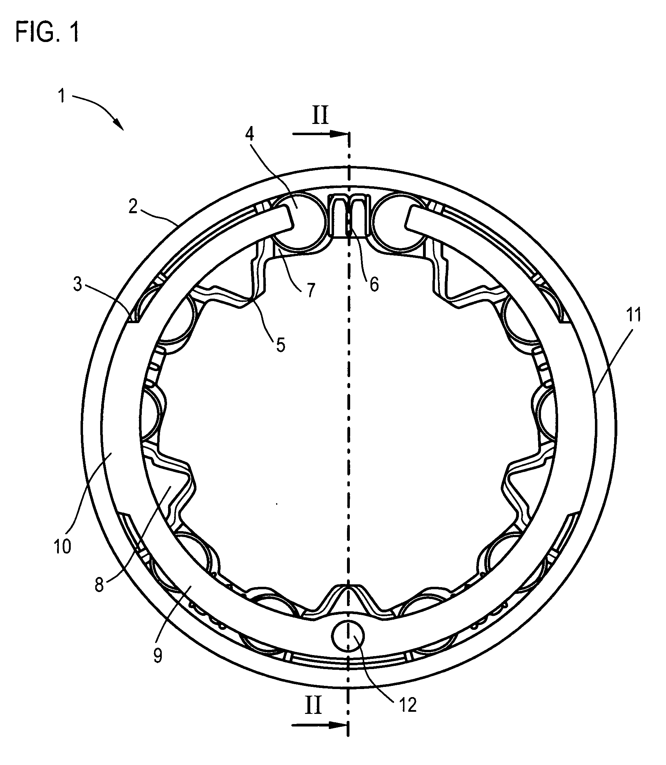

Die in Fig. 1 gezeigte schaltbare Kupplung 1 ist als Sitzhöhenverstellung für ein Kraftfahrzeug vorgesehen. Die schaltbare Kupplung 1 umfasst ein Gehäuse 2, das an seiner Innenseite eine Klemmfläche 3 aufweist. Klemmrollen 4 sind zwischen der Klemmfläche 3 und einem als Innenstern ausgebildeten Ritzel 5 angeordnet, das als Abtriebselement dient. Die Klemmrollen 4 werden durch Federn beaufschlagt und sind gegen Anlageflächen 7 eines Stellrings 8 angefedert.

Die schaltbare Kupplung 1 weist eine als Reibring 9 ausgebildete Reibbremse auf, die auf den Stellring 8 einwirkt. Der Reibring 9 ist als offener Ring ausgebildet und weist an seiner Außenseite gegenüberliegende Reibflächen 10, 11 auf, die an der als Laufbahn dienenden Innenseite des Gehäuses 2 anliegen. Der aus Stahl bestehende Reibring 9 ist mit Vorspannung in das Gehäuse 2 eingesetzt, ein Verbindungselement 12 verbindet den Reibring 9 und den Stellring 8.

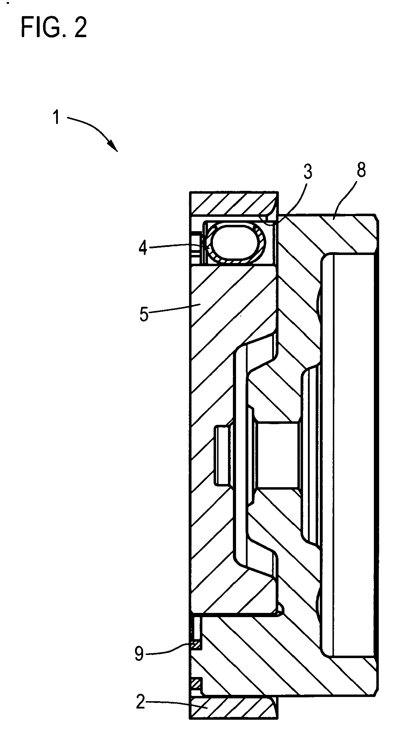

Fig. 1 zeigt die schaltbare Kupplung 1 mit dem Freilauf in der neutralen Mittelstellung, Fig. 2 zeigt einen Schnitt entlang der Linie II-II von Fig. 1. In diesem Zustand sind die Klemmrollen 4 zwischen der Klemmfläche 3 und Anlageflächen des Ritzels 5 geklemmt.

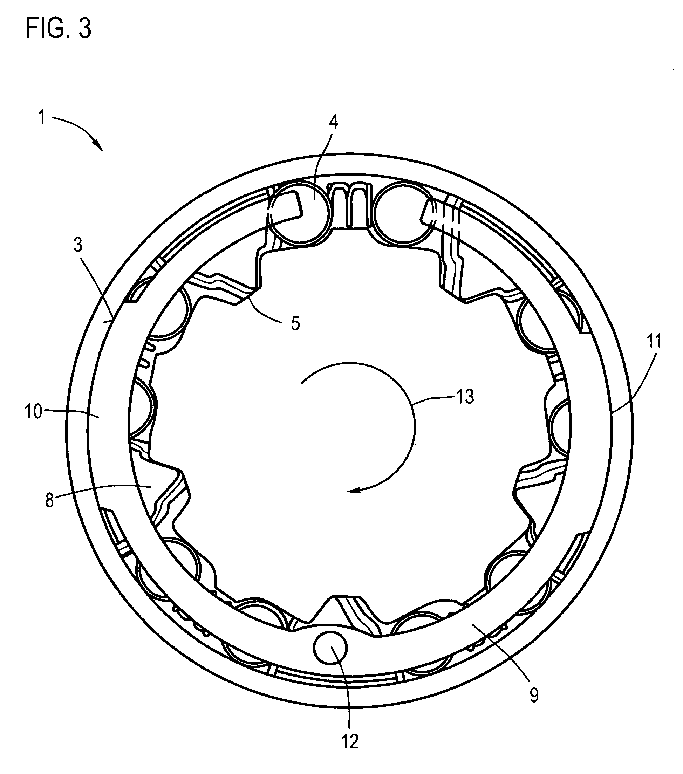

Fig. 3 zeigt den Freilauf der schaltbaren Kupplung 1 während des Schaltvorgangs. Die Klemmrollen 4 sind durch die Drehung des mit dem Antriebselement verbundenen Stellrings 8 freigeschaltet, sodass die Klemmrollen 4 das Ritzel 5 in Richtung des Pfeils 13 antreiben. Der Reibring 9 wird zwangsläufig bei der Drehung des Stellrings 8 im Uhrzeigersinn mitgeschleppt, da er über das Verbindungselement 12 formschlüssig mit dem Stellring 8 verbunden ist. Dabei tritt zwischen den Reibflächen 10, 11 und der Klemmfläche 3 an der Innenseite des Gehäuses 2 Reibung auf.

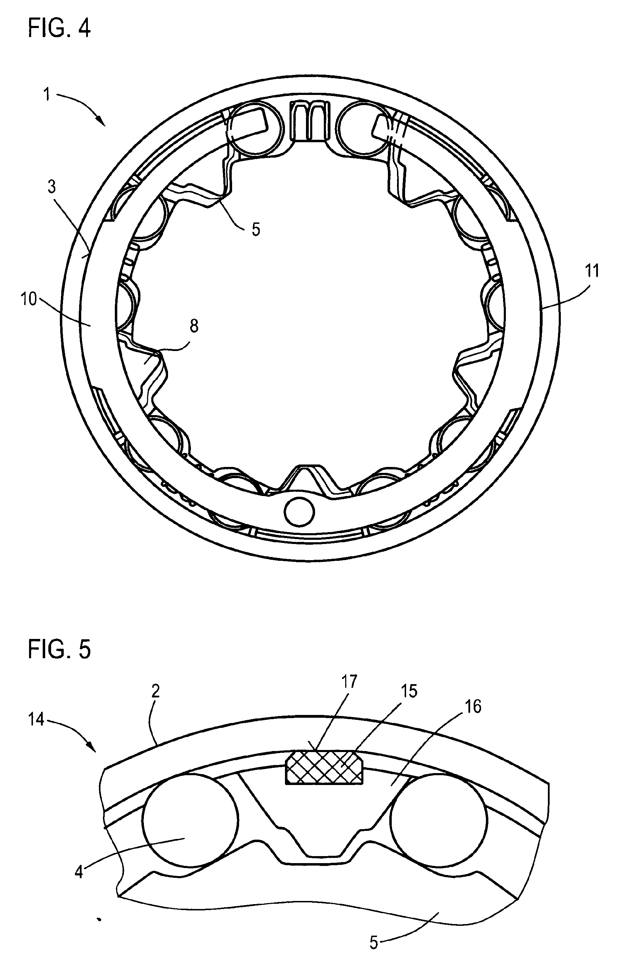

Fig. 4 zeigt den Freilauf der schaltbaren Kupplung 1 nach dem Schaltvorgang. Durch die zwischen den Reibflächen 10, 11 und der Klemmflächen 3 auftretende Reibung wird der Reibring 9 in der dargestellten Position gehalten. Ein Zurückdrehen im Gegenuhrzeigersinn, das bei herkömmlichen schaltbaren Kupplungen auftritt, wenn die Drehbewegung des Stellrings 8 beendet ist, kann nicht auftreten, da der Stellring 8 mit dem Reibring 9 fest verbunden ist. Beim nächsten Schalthub, das heißt bei der nächsten Drehbewegung des Stellrings 8, um das Ritzel 5 weiter anzutreiben, muss lediglich der geringe Einrollwinkel zwischen Ritzel 5 und Stellring 8 überwunden werden, damit das Ritzel 5 gedreht wird.

Fig. 5 zeigt einen Ausschnitt eines zweiten Ausführungsbeispiels einer schaltbaren Kupplung 14, von er lediglich ein Ausschnitt gezeigt ist. Der grundsätzliche Aufbau entspricht der in den Fig. 1 bis 4 gezeigten schaltbaren Kupplung 1. Abweichend von dem dort beschriebenen Ausführungsbeispiel weist die in Fig. 5 gezeigte schaltbare Kupplung 14 keinen Reibring auf, stattdessen ist eine Reibbremse vorgesehen, die Nocken 15 aufweist, die an einem Stellring 16 radial nach außen weisend angeformt sind. Die Nocken 15 bestehen aus einem temperaturbeständigen Elastomer, wodurch eine zuverlässige Funktion während der gesamten Lebensdauer sichergestellt ist.

Der Stellring 16 weist mehrere über den Umfang verteilt angeordnete Nocken 15 auf. Während des Schaltvorgangs tritt zwischen einer Reibfläche 17 an der Außenseite der Nocken 15 und der gegenüberliegenden Lauffläche an der Innenseite des Gehäuses 2 Reibung auf, die dazu führt, dass der Stellring 16 in der gestellten Position stehen bleibt. Nach dem Schaltvorgang behält der Stellring 16 die eingestellte Position bei, ein unerwünschtes Zurückdrehen wird vermieden.

### Bezugszahlenliste

| | |
|---|---|
| 1 | Kupplung |
| 2 | Gehäuse |
| 3 | Klemmfläche |
| 4 | Klemmrolle |
| 5 | Ritzel |
| 6 | Feder |
| 7 | Anlagefläche |
| 8 | Stellring |
| 9 | Reibring |
| 10 | Reibfläche |
| 11 | Reibfläche |
| 12 | Verbindungselement |
| 13 | Pfeil |
| 14 | Kupplung |
| 15 | Nocken |
| 16 | Stellring |
| 17 | Reibfläche |

## Patentansprüche

1. Schaltbare Kupplung (1) mit
einem Freilauf,
einem eine Klemmfläche (3) aufweisenden Gehäuse (2),
einem gegenüber dem Gehäuse drehbaren Antriebselement,
einem gegenüber dem Gehäuse drehbaren Abtriebselement (5),
mit an dem Abtriebselement vorgesehenen, der Klemmfläche zugewandten Klemmrampen,
mehreren Klemmrollen (4), die zwischen der Klemmfläche und den Klemmrampen angeordnet sind,
einem mit dem Antriebselement verbundenen, in dem Gehäuse entlang einer Laufbahn bewegbaren Stellring (8, 16), der Anlageflächen für die Klemmrollen aufweist, **dadurch gekennzeichnet, dass** die schaltbare Kupplung eine auf den Stellring (8, 16) einwirkende Reibbremse aufweist.

2. Schaltbare Kupplung nach Anspruch 1, **dadurch gekennzeichnet, dass** die Reibbremse als mit dem Stellring (8, 16) verbundener Reibring (9) ausgebildet ist, der in dem Gehäuse (2) im Bereich der Laufbahn angeordnet ist.

3. Schaltbare Kupplung nach Anspruch 2, **dadurch gekennzeichnet, dass** der Reibring (9) mit Vorspannung in das Gehäuse (2) eingesetzt ist.

4. Schaltbare Kupplung nach Anspruch 2 oder 3, **dadurch gekennzeichnet, dass** der Reibring (9) an seiner Außenseite wenigstens eine, vorzugsweise mehrere Reibflächen (10, 11) aufweist, die an der Laufbahn in dem Gehäuse (2) anliegen.

5. Schaltbare Kupplung nach Anspruch 4, **dadurch gekennzeichnet, dass** der Reibring (9) zwei einander gegenüberliegende Reibflächen (10, 11) aufweist.

6. Schaltbare Kupplung nach einem der Ansprüche 2 bis 5, **dadurch gekennzeichnet, dass** der Reibring (9) als offener Ring ausgebildet ist.

7. Schaltbare Kupplung nach einem der Ansprüche 2 bis 6, **dadurch gekennzeichnet, dass** der Reibring (9) aus Stahl besteht.

8. Schaltbare Kupplung nach einem der Ansprüche 2 bis 7, **dadurch gekennzeichnet, dass** der Reibring (9) mit dem Stellring (8) formschlüssig verbunden ist.

9. Schaltbare Kupplung nach Anspruch 1, **dadurch gekennzeichnet, dass** die Reibbremse Nocken (15) aufweist, die an dem Stellring (16) radial nach außen weisend angeformt sind und an der Laufbahn des Gehäuses (2) anliegen.

10. Schaltbare Kupplung nach Anspruch 9, **dadurch gekennzeichnet, dass** die Nocken (15) aus einem Elastomer bestehen.

## Claims

1. Switchable clutch (1) having a freewheel,
a housing (2) which has a clamping surface (3),
a drive input element which is rotatable relative to the housing,
a drive output element (5) which is rotatable relative to the housing,
with clamping ramps, which face toward the clamping surface, being provided on the drive output element,
a plurality of clamping rollers (4) which are arranged between the clamping surface and the clamping ramps,
a setting ring (8, 16) which is connected to the drive input element and which is movable in the housing along a raceway and which has contact surfaces for the clamping rollers, **characterized in that** the switchable clutch has a friction brake that acts on the setting ring (8, 16).

2. Switchable clutch according to Claim 1, **characterized in that** the friction brake is formed as a friction ring (9) which is connected to the setting ring (8, 16) and which is arranged in the housing (2) in the region of the raceway.

3. Switchable clutch according to Claim 2, **characterized in that** the friction ring (9) is inserted with preload into the housing (2).

4. Switchable clutch according to Claim 2 or 3, **characterized in that** the friction ring (9) has, on its outer side, at least one, preferably a plurality of friction surfaces (10, 11) which bear against the raceway in the housing (2).

5. Switchable clutch according to Claim 4, **characterized in that** the friction ring (9) has two friction surfaces (10, 11) situated opposite one another.

6. Switchable clutch according to one of Claims 2 to 5, **characterized in that** the friction ring (9) is formed as an open ring.

7. Switchable clutch according to one of Claims 2 to 6, **characterized in that** the friction ring (9) is composed of steel.

8. Switchable clutch according to one of Claims 2 to 7, **characterized in that** the friction ring (9) is connected to the setting ring (8) in a positively locking manner.

9. Switchable clutch according to Claim 1, **characterized in that** the friction brake has cams (15) which are formed onto the setting ring (16) so as to point radially outwards and which bear against the raceway of the housing (2).

10. Switchable clutch according to Claim 9, **characterized in that** the cams (15) are composed of an elastomer.

## Revendications

1. Embrayage commutable (1), comprenant une roue libre,
un boîtier (2) comprenant une surface de serrage (3),
un élément d'entraînement rotatif par rapport au boîtier,
un élément de sortie (5) rotatif par rapport au boîtier,
comprenant des rampes de serrage prévues sur l'élément de sortie et tournées vers la surface de serrage,
plusieurs rouleaux de serrage (4) qui sont disposés entre la surface de serrage et les rampes de serrage,
une bague de réglage (8, 16) reliée à l'élément d'entraînement et mobile dans le boîtier le long d'une voie de roulement, laquelle bague de réglage comprend des surfaces d'appui pour les rouleaux de serrage, **caractérisé en ce que** l'embrayage commutable comprend un frein à friction agissant sur la bague de réglage (8, 16).

2. Embrayage commutable selon la revendication 1, **caractérisé en ce que** le frein à friction est réalisé sous forme de bague de friction (9) reliée à la bague de réglage (8, 16), laquelle bague de friction est disposée dans le boîtier (2) dans la région de la voie de roulement.

3. Embrayage commutable selon la revendication 2, **caractérisé en ce que** la bague de friction (9) est insérée avec précontrainte dans le boîtier (2).

4. Embrayage commutable selon la revendication 2 ou 3, **caractérisé en ce que** la bague de friction (9) comprend sur sa face extérieure au moins une, de préférence plusieurs, surfaces de friction (10, 11) qui s'appliquent contre la voie de roulement dans le boîtier (2).

5. Embrayage commutable selon la revendication 4, **caractérisé en ce que** la bague de friction (9) comprend deux surfaces de friction (10, 11) en regard l'une de l'autre.

6. Embrayage commutable selon l'une quelconque des revendications 2 à 5, **caractérisé en ce que** la bague de friction (9) est réalisée sous forme de bague ouverte.

7. Embrayage commutable selon l'une quelconque des revendications 2 à 6, **caractérisé en ce que** la bague de friction (9) est constituée d'acier.

8. Embrayage commutable selon l'une quelconque des revendications 2 à 7, **caractérisé en ce que** la bague de friction (9) est reliée à la bague de réglage (8) par complémentarité de forme.

9. Embrayage commutable selon la revendication 1, **caractérisé en ce que** le frein à friction comprend des ergots (15) qui sont formés sur la bague de réglage (16) de manière orientée radialement vers l'extérieur et qui s'appliquent contre la voie de roulement du boîtier (2).

10. Embrayage commutable selon la revendication 9, **caractérisé en ce que** les ergots (15) sont constitués d'un élastomère.
